# EUROPEAN PATENT APPLICATION

(11) **EP 4 474 525 A1**
(43) Date of publication of application: **11.12.2024**
(21) Application number: 23756483.6
(22) Date of filing: 17.02.2023
(51) Int. Cl.: C23C 22/00, C21D 8/12, C22C 38/00, C22C 38/60, H01F 1/147

(54) **GRAIN-ORIENTED ELECTROMAGNETIC STEEL SHEET**

(30) Priority: 17.02.2022 JP 2022023259
(71) Applicant: JFE Steel Corporation, Tokyo 100-0011 (JP)
(72) Inventor: IMAMURA, Takeshi, Tokyo 100-0011 (JP); WATANABE, Makoto, Tokyo 100-0011 (JP); TOMOZAWA, Masanari, Tokyo 100-0011 (JP); YAMAGUCHI, Hiroi, Tokyo 100-0011 (JP); TAKAJO, Shigehiro, Tokyo 100-0011 (JP); TAKAHASHI, Mari, Tokyo 100-0011 (JP)
(74) Representative: Haseltine Lake Kempner LLP
(86) International application number: PCT/JP2023/005868
(87) International publication number: WO 2023/157959

(57) **Abstract**

Provided is a grain-oriented electrical steel sheet with good film adhesion. Among the elements present at grain boundaries between ceramic particles contained in a base film of the grain-oriented electrical steel sheet, either or both of S and Se elements are contained in a range of 0.02 at% to 2.00 at%.

## Description

### TECHNICAL FIELD

The present disclosure relates to a grain-oriented electrical steel sheet that is suitable as an iron core material for transformers.

### BACKGROUND

A grain-oriented electrical steel sheet is a soft magnetic material used as an iron core material for transformers and large generators, and it has a crystal texture in which <001> axis of crystal orientation that is the easy magnetization axis of iron is highly accorded with the rolling direction of the steel sheet. Such a crystal texture is formed by secondary recrystallization, where crystal grains with {110}<001> orientation that is called Goss orientation preferentially grow into large grains.

Iron loss properties are the most important factor in the grain-oriented electrical steel sheet. The iron loss properties indicate the energy loss when the steel sheet is excited, and a lower value means less loss and better material. Examples of methods to reduce iron loss include a method of reducing variation in the Goss orientation to bring it closer to the ideal Goss orientation, and a method of performing special treatment called magnetic domain refining treatment. Because grain-oriented electrical steel sheets are used in a stacked manner, it is also possible to use a method where an insulating coating is applied to the steel sheet surface, and the insulating coating provides tension to the steel sheet to reduce iron loss.

The insulating coating generally has a two-layer structure consisting of a base film mainly made of forsterite and an applied coating. In addition to the above-mentioned tension-applying effect, adhesion of the forsterite film to the steel sheet is particularly important. For example, JP 2011-158328 A (PTL 1) describes a technique for irradiating a grain-oriented electrical steel sheet with light and evaluating film adhesion based on the brightness of the irradiated area.

To improve the film properties such as film adhesion, JP H08-291390 A (PTL 2) describes a technique for fixing TiN in a forsterite film, JP H10-121213 A (PTL 3) describes a technique for specifying Ti, B, and Al contents in a forsterite film, and JP 2012-31518 A (PTL 4) describes a technique for specifying a ratio of Ti or B to N in a forsterite film, respectively.

### CITATION LIST

### Patent Literature

PTL 1: JP 2011-158328 A
PTL 2: JP H08-291390 A
PTL 3: JP H10-121213 A
PTL 4: JP 2012-31518 A

### SUMMARY

### (Technical Problem)

Although Ti and B are used in the above methods to improve film properties, these methods still have problems with the adhesion of a base film of a grain-oriented electrical steel sheet, such as the adhesion of a forsterite film.

It could thus be helpful to provide a grain-oriented electrical steel sheet having a base film where the adhesion of the base film is excellent.

### (Solution to Problem)

To solve the above problems, we have found that a grain-oriented electrical steel sheet with good film properties can be stably obtained by allowing S and Se to be present in grain boundaries of a forsterite film, thereby completing the present disclosure.

The following describes experiments that led to the present disclosure.

### <Experiment 1>

Steel slabs containing C: 0.075 %, Si: 3.45 %, Mn: 0.12 %, Se: 0.020 % in mass%, with the balance being Fe and inevitable impurities, were prepared by continuous casting. Then, the steel slabs were subjected to slab heating for soaking at 1400 °C for 25 minutes, and then to hot rolling to obtain a thickness of 2.4 mm. Next, the steel sheets were subjected to hot-rolled sheet annealing for 30 seconds at 950 °C in a dry nitrogen atmosphere. After the hot-rolled sheet annealing, surface scale was removed by pickling, and the steel sheets were further subjected to cold rolling to obtain a thickness of 1.5 mm. Next, the steel sheets were subjected to intermediate annealing at 1140 °C for 20 seconds and then to cold rolling to obtain a thickness of 0.23 mm. Next, the steel sheets were subjected to primary recrystallization annealing that also served as decarburization annealing at 830 °C for 100 seconds in a wet atmosphere with 60 vol% H₂-40 vol% N₂ and a dew point of 60 °C. Further, each steel sheet was applied with an annealing separator mainly composed of MgO and then subjected to secondary recrystallization annealing where it was held at 1200 °C for 10 hours. At that time, the atmosphere introduced was changed in various ways as listed in Table 1. In all cases, a N₂ atmosphere was used during heating up to 800 °C, and an Ar atmosphere was used during cooling after the holding.

After the secondary recrystallization annealing, the film adhesion of the obtained samples was evaluated. The film adhesion was evaluated by winding the steel sheet around cylinders of various diameters and determining the minimum cylinder diameter at which the film would not peel off. A smaller minimum diameter indicates better film adhesion.

### [Table 1]

**Table 1**

| Condition | 800°C→1000°C | 1000°C→1200°C | Holding at 1200°C |
|---|---|---|---|
| I | H₂ | H₂ | H₂ |
| II | N₂ | N₂ | N₂ |
| III | Ar | Ar | Ar |
| IV | N₂ | H₂ | Ar |
| V | H₂ | Ar | N₂ |
| VI | N₂ | Ar | H₂ |
| VII | Ar | Ar | H₂ |
| VIII | N₂ | H₂ | H₂ |

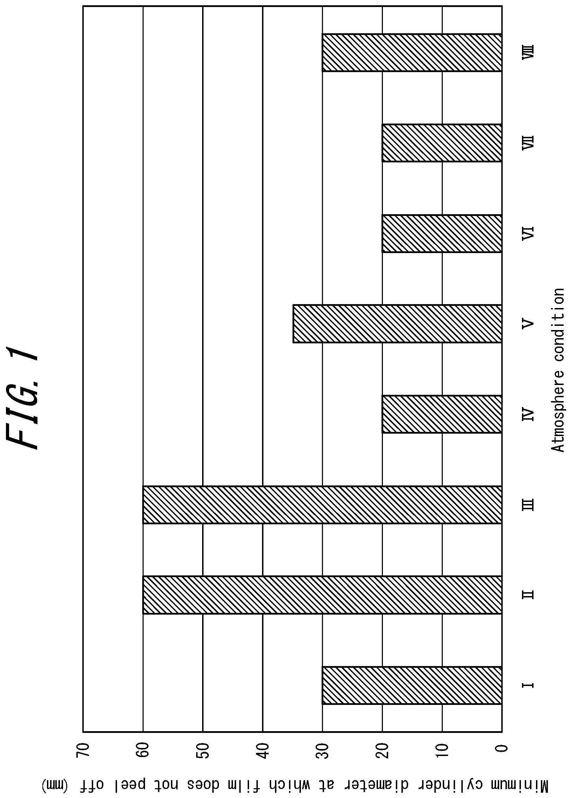

The evaluation results of film adhesion are illustrated in FIG. 1. As is clear from FIG. 1, conditions IV, VI, and VII had excellent film adhesion. To investigate the cause, for samples of condition VI with good film adhesion and condition I with slightly poor film adhesion, a cross section of the forsterite film with a sample thickness of approximately 50 nm was cut out by FIB processing (Helios 600i), and the microstructure was observed and the element distribution was confirmed using a field-emission transmission electron microscope (TEM) (Talos F200X) equipped with an energy dispersive spectrum analyzer (EDS analyzer) at an accelerating voltage of 200 kV and a beam diameter of 1 nm or less. The results indicate that the element ubiquitous in forsterite grain boundaries varies depending on the conditions.

FIG. 2 schematically illustrates a film cross-section used in the above experiment, and it also illustrates the location where the element distribution state is measured. As illustrated in FIG. 2, line analysis was performed across the forsterite grain boundary to investigate the element distribution state. The measurement distance was approximately 200 nm across the grain boundary.

FIG. 3 schematically illustrates the overall measurement results. It can be confirmed that Mg, Si, and O are present in the stoichiometric composition ratio of forsterite Mg₂SiO₄ under both conditions.

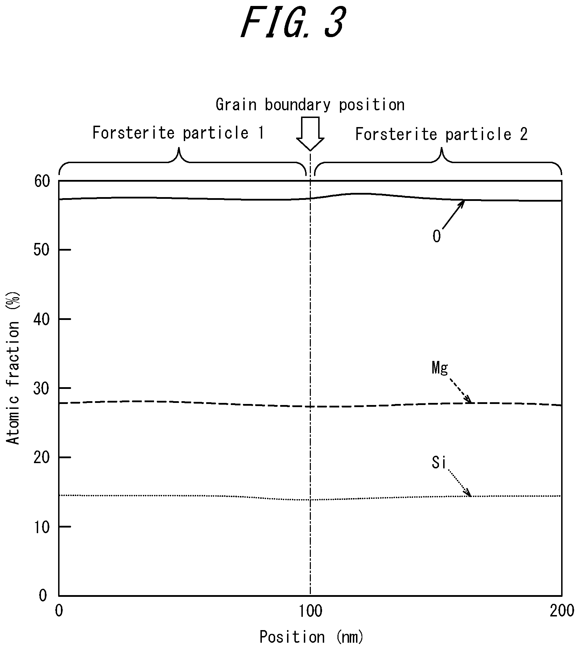

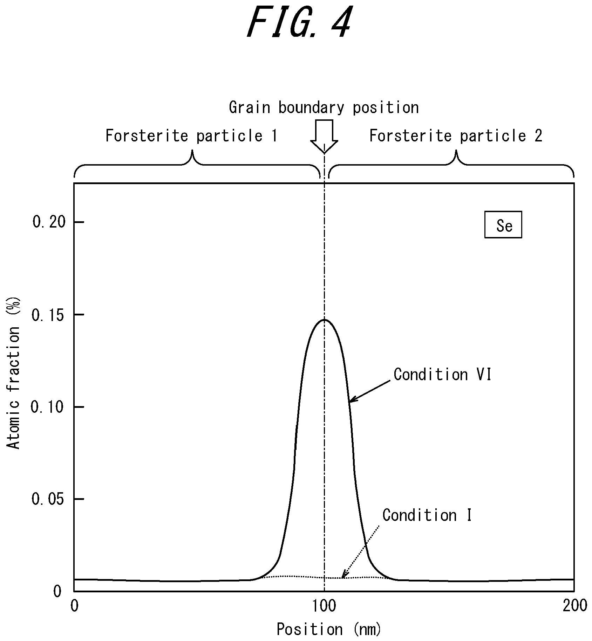

What should be noted here is the trace elements on the grain boundaries. FIG. 4 only illustrates the profiles of Se in an overlapping manner for condition comparison. Note that the scale of the vertical axis in FIG. 4 is different from that in FIG. 3. As is clear from the results indicated in FIG. 4, the presence of Se peak was confirmed in condition VI with good film adhesion, and no Se peak was confirmed in condition I. The amount of Se (peak value) in the condition VI was approximately 0.15 at%. Although not illustrated in the figure, a Mn peak, as another element, was also confirmed. The at% in the present disclosure can be obtained by integrating the profile of Se at the peak position using the EDS analyzer equipped in Talos F200X when the element of interest is Se, for example.

### <Experiment 2>

Steel slabs containing C: 0.033 %, Si: 3.01 %, Mn: 0.25 %, Al: 0.030 %, and N: 0.078 % in mass%, with the balance being Fe and inevitable impurities, were prepared by continuous casting. Then, the steel slabs were subjected to slab heating for soaking at 1420 °C for 25 minutes, and then to hot rolling to obtain a thickness of 2.7 mm. Next, the steel sheets were subjected to hot-rolled sheet annealing for 30 seconds at 1050 °C in a dry nitrogen atmosphere. After the hot-rolled sheet annealing, surface scale was removed by pickling, and then the steel sheets were subjected to cold rolling to obtain a thickness of 1.8 mm. Next, the steel sheets were subjected to intermediate annealing at 1080 °C for 100 seconds and then to cold rolling to obtain a thickness of 0.23 mm. The steel sheets were further subjected to primary recrystallization annealing that also served as decarburization annealing at 840 °C for 100 seconds in a wet atmosphere with 50 vol% H₂-50 vol% N₂ and a dew point of 45 °C. Further, MgO was applied as an annealing separator. As this time, the conditions were divided into condition A where 3 parts by mass of magnesium sulfate was added to MgO, and condition B where only MgO was applied. Next, secondary recrystallization annealing was performed where the steel sheets were held at 1200 °C for 20 hours. The atmosphere introduced was a H₂ atmosphere for the first 10 hours of holding, and an Ar atmosphere for the other half of holding. After the secondary recrystallization annealing, the film adhesion of the obtained samples was evaluated in the same manner as in Experiment 1.

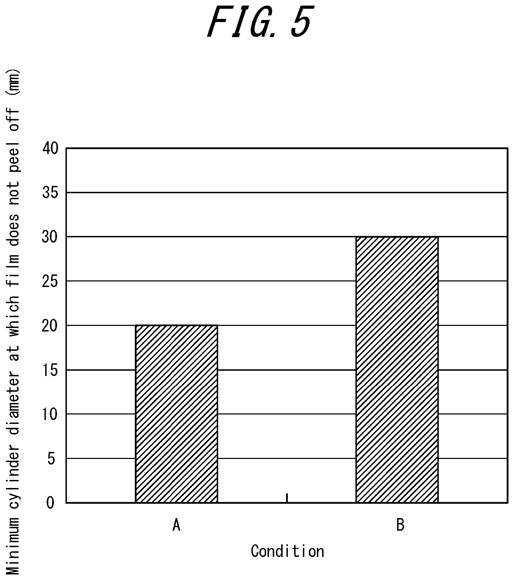

The results are illustrated in FIG. 5, indicating that excellent adhesion was obtained in condition A. The forsterite film of these samples was investigated in the same manner as in Experiment 1. As a result, a S peak was detected at the grain boundaries in condition A, and the amount was approximately 0.05 at%. On the other hand, no S peak was detected in condition B.

When summarizing the results of the above two experiments, it was found that S or Se concentration was observed at forsterite grain boundaries in both cases under conditions with good film adhesion. Although it is not necessarily clear why S or Se concentration improves film adhesion, we consider as follows. That is, the anchor effect of a base film contributes greatly to the adhesion between the base film and a steel substrate, and the contribution of gravitational interaction between the base film and the steel substrate is small. Therefore, when the base film peels off, it is necessary to destroy the base film itself, including the anchors. In the experiments, the base film to be destroyed is an aggregate of forsterite particles, so that fractures generally occur at the grain boundaries.

In the experiments, S and Se are concentrated at the grain boundaries, suggesting the presence of selenides and sulfides of the S and Se. These selenides and sulfides are known to be softer than ceramics and are expected to be able to relieve stress during bending and other processing. Therefore, it is presumed that the stress-relieving effect suppresses the fracture at grain boundaries and improves the film adhesion.

The process of S and Se concentration at grain boundaries is considered as follows. For example, it is thought that Se is present in the steel and forms MnSe precipitates, that is, inhibitors in Experiment 1. During the secondary recrystallization annealing, the inhibitors are decomposed mainly by the introduction of H₂, where they react with H₂ in the atmosphere and are released in the gas phase as H₂Se. It is thought that this reaction becomes active at high temperatures, and forsterite crystal grains (particles) are formed on the steel sheet surface at that time.

When Se is released from the steel substrate to the outside in the gas phase, the gas containing Se passes through the grain boundaries of forsterite. It is thought that a part of Se segregates at the grain boundaries or forms sulfides with Mn and the like at that time. According to this idea, if purification by H₂ is promoted, Se at the grain boundaries of forsterite will also be purified and no longer exist, and the effect of improving film adhesion will be lost.

Further, although S and Se were not contained in the steel in Experiment 2, S was found at grain boundaries of ceramic particles contained in the base film. The reason is thought to be the sulfate added to MgO, from which S penetrated to the sample. Sulfates and selenates decompose at relatively low temperatures during secondary recrystallization annealing, allowing S and Se to penetrate to the steel. This leads to the same situation as when S and Se have been added to the material. Therefore, it is presumed that the results were the same as those obtained in Experiment 1.

The present disclosure is based on the new findings and further studies. The primary features of the present disclosure are as follows.
1. A grain-oriented electrical steel sheet comprising a base film, wherein the base film comprises ceramic particles, and either or both of S and Se are present at 0.02 at% to 2.00 at% at grain boundaries of the ceramic particles.
2. The grain-oriented electrical steel sheet according to aspect 1., wherein the S and Se elements are sulfides or selenides of at least one selected from the group consisting of Mn, Ca, Sr, Cu and Mg.
3. The grain-oriented electrical steel sheet according to aspect 1. or 2., wherein a thickness of a layer between grain boundaries of the ceramic particles where the S and Se elements are present is 50 nm or less.
4. The grain-oriented electrical steel sheet according to any one of aspects 1. to 3., wherein the ceramic particles comprise forsterite.

### (Advantageous Effect)

According to the present disclosure, it is possible to efficiently obtain a grain-oriented electrical steel sheet having good film properties, especially film properties with excellent peeling resistance.

### BRIEF DESCRIPTION OF THE DRAWINGS

In the accompanying drawings:
FIG. 1 illustrates the relationship between atmosphere conditions and the minimum cylinder diameter at which a film does not peel off;

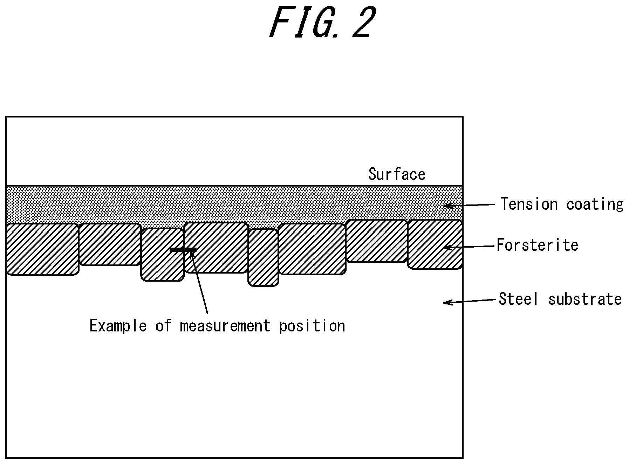

FIG. 2 schematically illustrates a film cross-section and a location where the element distribution state is measured;
FIG. 3 illustrates the overall results of measurement at the measurement position in FIG. 2;
FIG. 4 changes the scale of the vertical axis in FIG. 3. and illustrates the measurement results of Se; and
FIG. 5 illustrates the relationship between different annealing separators and the minimum cylinder diameter at which a film does not peel off.

### DETAILED DESCRIPTION

The following explains the reasons for limitations placed on the features of the present disclosure. The steel sheet of the present disclosure is a grain-oriented electrical steel sheet having a base film, where ceramic particles are contained in the base film, and either or both of S element and Se element need to be present in a range of 0.02 at% to 2.00 at% at grain boundaries of the ceramic particles. Outside this range, the bending peeling properties deteriorate. Desirably, the lower limit is 0.04 at% and the upper limit is 0.50 at%.

In the present disclosure, the grain boundaries of the ceramic particles are scanned as illustrated in FIG. 4, and the peak value of S and/or Se is taken as S and/or Se in at%. Further, in the present disclosure, ceramic grain boundaries are measured at 50 locations, and the average value of all the measurements is taken as the value in at%. Furthermore, the effects of the present disclosure are more advantageous when not only the average value but also the results of 50 % of the measured locations are within the above at% range.

The S and/or Se is desirably present as sulfides and/or selenides of at least one selected from the group consisting of Mn, Ca, Sr, Cu and Mg, respectively. This is because these materials are softer than ceramic particles and are thought to be able to relieve stress during bending and other processing, as described above.

Here, among the grain boundaries of the ceramic particles, the thickness of a layer between the grain boundaries of the ceramic particles where S and/or Se elements are present is desirably 50 nm or less. This is because the S element and/or Se element layer itself is destroyed by bending if the thickness exceeds 50 nm.

The thickness is defined as twice the full width half maximum of the S and/or Se element peak obtained by the line analysis using Talos described above. Further, in the present disclosure, the thickness is (the average value of all) the values measured in the following range.

Next, the chemical composition of a steel material (slab) suitable for manufacturing the grain-oriented electrical steel sheet of the present disclosure will be described.

### C: 0.020 mass% to 0.100 mass%

When the C content is less than 0.020 mass%, precipitation of fine carbide is insufficient or the steel microstructure of the material becomes α-single phase, and the steel becomes brittle during casting or hot rolling. This causes cracks in the slab or edge cracks at the edge of a steel sheet after hot rolling, which easily leads to defects that hamper the manufacture. On the other hand, when the C content exceeds 0.100 mass%, it is difficult to reduce the C content by decarburization annealing to 0.005 mass% or less at which magnetic aging does not occur. Therefore, the C content is preferably in a range of 0.020 mass% to 0.100 mass%. The lower limit is more preferably 0.025 mass%. The upper limit is more preferably 0.080 mass%.

### Si: 2.00 mass% to 5.00 mass%

Si is an element necessary for increasing specific resistance of steel and reducing iron loss. The above effects may be insufficient with a Si content of less than 2.00 mass%. On the other hand, when the Si content exceeds 5.00 mass%, the workability is deteriorated, and it is difficult to manufacture by rolling. Therefore, the Si content is preferably in a range of 2.00 mass% to 5.00 mass%. The lower limit is more preferably 2.50 mass%. The upper limit is more preferably 4.00 mass%.

### Mn: 0.01 mass% to 1.00 mass%

Mn is an element necessary for improving hot workability of steel. The above effect may be insufficient with a Mn content of less than 0.01 mass%. On the other hand, when the Mn content exceeds 1.00 mass%, the magnetic flux density of a product sheet decreases. Therefore, the Mn content is preferably in a range of 0.01 mass% to 1.00 mass%. The lower limit is more preferably 0.02 mass%. The upper limit is more preferably 0.30 mass%.

Regarding the other components, a case of using inhibitors to cause secondary recrystallization and a case of not using inhibitors to cause secondary recrystallization are discussed separately.

First, the case of using inhibitors to cause secondary recrystallization will be described. For example, when using AlN-based inhibitors, it is preferable to contain Al in a range of 0.0100 mass% to 0.0400 mass% and N in a range of 0.0030 mass% to 0.0150 mass%, respectively. When using MnS/MnSe-based inhibitors, it is preferable to contain the amount of Mn described above, and either or both of S: 0.002 mass% to 0.030 mass% and Se: 0.003 mass% to 0.030 mass%. If the amount added is below the corresponding lower limit, the effects of inhibitors may be insufficient. On the other hand, if the amount added exceeds the corresponding upper limit, undissolved inhibitor components remain during slab heating, which deteriorates the magnetic properties. AlN-based inhibitors and MnS/MnSe-based inhibitors may be used in combination.

On the other hand, in the case of not using inhibitors to cause secondary recrystallization, the contents of Al, N, S and Se, which are inhibitor-forming components as described above, need to be as low as possible. It is preferable to use a steel material with Al: less than 0.010 mass%, N: less than 0.0050 mass%, S: less than 0.005 mass%, and Se: less than 0.005 mass%.

The balance other than the above components is Fe and inevitable impurities.

In addition to the above components, the grain-oriented electrical steel sheet of the present disclosure may appropriately contain, in mass%, at least one selected from the group consisting of Ni: 0.001 % to 0.150 %, Sb: 0.005 % to 0.500 %, Sn: 0.005 % to 0.200 %, P: 0.01 % to 0.08 %, Bi: 0.005 % to 0.100 %, Mo: 0.005 % to 0.100 %, B: 0.0002 % to 0.0025 %, Cu: 0.01 % to 0.20 %, Cr: 0.01 % to 0.20 %, Nb: 0.0010 % to 0.0100 %, V: 0.001 % to 0.010 %, Ti: 0.001 % to 0.010 %, and Ta: 0.001 % to 0.010 %, for the purpose of improving magnetic properties.

Next, a method of manufacturing the grain-oriented electrical steel sheet of the present disclosure will be described. The manufacturing method may be a general method of manufacturing an electrical steel sheet. For example, molten steel whose chemical composition has been adjusted to a predetermined chemical composition is subjected to general ingot casting or continuous casting to obtain a steel slab with the above-described chemical composition. Regarding the above-described additive components, if it is difficult to add the components in the middle of the process, they are desirably added to the molten steel. The steel slab is heated and hot rolled according to a general method. In a case of containing inhibitor-forming elements, the heating temperature is preferably 1300 °C or higher for solid solution. It is more preferably 1350 °C or higher. The upper limit is not specified. Because the melting point of steel containing Si drops to approximately 1460 °C, the upper limit needs to be below that temperature. For chemical composition that contains no inhibitor, it is desirable to set the heating temperature to 1250 °C or lower from the viewpoint of cost reduction.

Next, hot-rolled sheet annealing may be performed if necessary. Hot-rolled sheet annealing makes the microstructure more uniform and reduces variations in the magnetic properties of the steel sheet. From the viewpoint of microstructure uniformity, it is desirable to perform the annealing at 900 °C or higher for 15 seconds or longer.

After the hot-rolled sheet annealing, cold rolling is performed once or twice with intermediate annealing performed therebetween to obtain a final sheet thickness, and then primary recrystallization annealing is performed. Performing warm rolling where the steel sheet temperature is raised to 100 °C to 300 °C in the cold rolling, or performing aging treatment in a range of 100 °C to 300 °C once or multiple times during the cold rolling is effective in changing the recrystallized texture and improving the magnetic properties.

Further, it is desirable to hold the steel sheet at 900 °C or higher for 30 seconds or longer in the intermediate annealing because it is effective in improving the microstructure. It is more desirable to hold the steel sheet at 1000 °C or higher for 60 seconds or longer.

The primary recrystallization annealing may also serve as decarburization of the steel sheet. The annealing temperature of the primary recrystallization annealing is preferably 800 °C or higher and 900 °C or lower from the viewpoint of decarburization. From the viewpoint of decarburization, it is desirably in a wet atmosphere. Further, the heating rate to the holding temperature in the primary recrystallization annealing is desirably in a range of 50 °C/s or higher and 1000 °C/s or lower, because good final magnetic properties can be obtained in this case.

Next, the present disclosure requires the application of an annealing separator to the front of the steel sheet, followed by secondary recrystallization annealing to develop secondary recrystallized grains with Goss orientation and to form a base film composed of ceramic particles such as forsterite. To form the forsterite, it is desirable to suspend MgO powder in a solution such as water and then apply the solution as an annealing separator on the steel sheet with silica formed on the surface.

The present disclosure requires the presence of S or Se at the grain boundaries of ceramics such as forsterite, and if these elements are not contained in the material composition, it is desirable to add a substance containing S or Se together with MgO. Alternatively, a sulfurization process using a H₂S atmosphere or a salt bath containing FeS may also be performed.

Examples of the substance containing S or Se include sulfides, selenides, sulfates, and selenates. The type of gas introduced as the atmosphere during secondary recrystallization annealing is precisely controlled. For example, it is desirable to control the time and starting temperature of H₂ atmosphere introduction according to the form of S introduced (whether it is contained in the material composition or introduced by sulfurization during the process), so that S or Se can be stably present at the ceramic grain boundaries. It is particularly important to control the introduction time of Hz atmosphere.

However, the atmosphere control is not the only method to realize the present disclosure. Other methods can also be used. The annealing temperature of secondary recrystallization annealing is desirably maintained at 1100 °C or higher for 3 hours or longer for removing inhibitor components and other impurities from the steel substrate (purification). The annealing temperature is more desirably 1150 °C or higher, and the holding time of the annealing is more desirably 5 hours or longer. The upper limits of the temperature or the holding time are not particularly limited. However, from the viewpoint of productivity, for example, the upper limit of the temperature is about 1275 °C, and the upper limit of the holding time is about 20 hours.

After the secondary recrystallization annealing, performing water washing, brushing, or pickling is effective for removing the adhered annealing separator. Next, it is effective to further perform flattening annealing to adjust the shape, for iron loss reduction.

In the present disclosure, a transmission electron microscope (TEM) or a three-dimensional atom probe (3DAP) may be used to measure the grain boundary segregation amount. In the case of using the transmission electron microscope (TEM), the grain boundary segregation amount can be quantified by EDS analysis of grain boundary under conditions of a sample thickness of 100 nm or less, an accelerating voltage of 40 kV or more, and a beam diameter of 1 nm or less. On the other hand, in the case of using the 3DAP, a needleshaped sample with the sample tip adjusted to 200 nm or less is used and laserassisted thermal excitation is utilized to perform the measurement under conditions where the detection efficiency is 20 % or more, and element concentration profiles in regions across the grain boundaries are extracted from the obtained three-dimensional ion map to quantify the distribution of elements segregated at the grain boundaries.

For the manufacturing method of the grain-oriented electrical steel sheet, conditions other than those mentioned above may be in accordance with conventional methods.

### EXAMPLES

### (Example 1)

Steel slabs containing C: 0.062 %, Si: 3.30 %, Mn: 0.15 %, N: 0.0057 %, sol. Al: 0.0250 %, and Se: 0.013 % in mass%, with the balance being Fe and inevitable impurities, were prepared by continuous casting. Then, the steel slabs were subjected to slab heating for soaking at 1400 °C for 30 minutes, and then to hot rolling to obtain a thickness of 2.4 mm. Next, the steel sheets were subjected to hot-rolled sheet annealing for 30 seconds at 1050 °C in a dry nitrogen atmosphere. After the hot-rolled sheet annealing, surface scale was removed by pickling, and the steel sheets were subjected to cold rolling to obtain a thickness of 1.8 mm, then to intermediate annealing at 950 °C for 200 seconds, and then to cold rolling to obtain a thickness of 0.23 mm. Next, the steel sheets were subjected to primary recrystallization annealing that also served as decarburization annealing at 830 °C for 80 seconds in a wet atmosphere with 50 vol% H₂-50 vol% N₂ and a dew point of 60 °C. Next, each steel sheet was applied with an annealing separator mainly composed of MgO and then subjected to secondary recrystallization annealing where it was held at 1200 °C for 10 hours. At that time, as indicated in Table 2, various gases were used in each temperature range. The heating up to 800 °C, which is not listed in Table 2, was performed in a N₂ atmosphere, and the cooling was performed in an Ar atmosphere.

The film adhesion of the samples thus obtained was evaluated by winding the steel sheet around cylinders of various diameters and determining the minimum cylinder diameter at which the film would not peel off. When the minimum cylinder diameter was 25 mm or less, it was judged to have excellent film adhesion. The results are listed in Table 2.

Here, forsterite was formed as a base film under all conditions in this Example. Using the same method as in Experiment 1, elements concentrated at forsterite grain boundaries and their amounts (peak value) and thicknesses (peak half width) were investigated. The results are also listed in Table 2. The investigation was conducted at grain boundaries at 50 locations, and the average value was used.

### [Table 2]

**Table 2**

| No. | Heating | | | Holding | | Element concentrated at forsterite grain boundaries | Amount of S or Se | Thickness of concentrated S or Se | Minimum cylinder diameter at which film does not peel off | Remarks |
|---|---|---|---|---|---|---|---|---|---|---|
| | 800C→ 1000°C | 1000°C→ 1100°C | 1100°C→ 1200°C | To 5 hours after start of holding | From 5 hours to 10 hours after start of holding | | | | | |
| | | | | | | | at% | nm | mm | |
| 1 | H₂ | H₂ | H₂ | H₂ | Ar | None | - | - | 35 | Comparative Example |
| 2 | N₂ | H₂ | H₂ | H₂ | Ar | Se, Mn | 1.58 | 40 | 15 | Example |
| 3 | Ar | Ar | N₂ | N₂ | H₂ | Se | 0.35 | 24 | 20 | Example |
| 4 | N₂ | H₂ | H₂ | Ar | Ar | Se | 0.07 | 20 | 20 | Example |
| 5 | H₂ | N₂ | N₂ | H₂ | Ar | Se, Mn | 0.16 | 20 | 20 | Example |
| 6 | N₂ | H₂ | H₂ | H₂ | H₂ | None | - | - | 30 | Comparative Example |
| 7 | H₂ | H₂ | H₂ | H₂ | Ar | Se, Mn | 212 | 60 | 40 | Comparative Example |

According to Table 2, it is understood that a grain-oriented electrical steel sheet with excellent film adhesion can be obtained under conditions within the scope of the present disclosure.

### (Example 2)

Steel slabs containing C: 0.025 %, Si: 3.12 %, Mn: 0.09 %, N: 0.0021 %, sol. Al: 0.0061 % in mass%, with the balance being Fe and inevitable impurities, were prepared by continuous casting. Then, the steel slabs were subjected to slab heating for soaking at 1200 °C for 30 minutes, and then to hot rolling to obtain a thickness of 2.2 mm. Next, the steel sheets were subjected to hot-rolled sheet annealing for 30 seconds at 1100 °C in a dry nitrogen atmosphere. After the hot-rolled sheet annealing, surface scale was removed by pickling, and the steel sheets were subjected to cold rolling to obtain a thickness of 0.23 mm. Next, the steel sheets were subjected to primary recrystallization annealing that also served as decarburization annealing at 850 °C for 30 seconds in a wet atmosphere with 50 vol% H₂-50 vol% N₂ and a dew point of 50 °C. Next, the compounds listed in Table 3 were added in the amounts listed in Table 3 together with MgO and applied to the steel sheets. Next, secondary recrystallization annealing was performed where the steel sheets were held at 1200 °C for 5 hours. At that time, the atmosphere gas was a H₂ atmosphere for 3 hours from the start of holding, a N₂ atmosphere until the temperature was raised to 1200 °C, and an Ar atmosphere during the last 2 hours of holding and cooling.

The film adhesion of the samples thus obtained was evaluated by winding the steel sheet around cylinders of various diameters and determining the minimum cylinder diameter at which the film would not peel off. The results are listed in Table 3.

Here, forsterite was formed as a base film under all conditions in this Example. Using the same method as in Experiment 1, elements concentrated at forsterite grain boundaries and their amounts (peak value) and thicknesses (peak half width) were investigated. The results are also listed in Table 3. The investigation was conducted in the same manner as in Example 1.

### [Table 3]

**Table 3**

| No. | Compound added to MgO | Addition amount (parts by mass to MgO) | Element concentrated at forsterite grain boundaries | Amount of S or Se | Thickness of concentrated S or Se | Minimum cylinder diameter at which film does not peel off | Remarks |
|---|---|---|---|---|---|---|---|
| | | | | at% | nm | mm | |
| 8 | None | None | None | - | - | 45 | Comparative Example |
| 9 | SrSO₄ | 3 parts by mass | S, Mn, Sr | 0.08 | 18 | 20 | Example |
| 10 | Ca(OH)₂ | 3 parts by mass | None | - | - | 45 | Comparative Example |
| 11 | Ca(OH)₂ + MgSO₄ | 1.5 parts by mass + 1.5 parts by mass | S, Mn, Ca | 0.21 | 24 | 20 | Example |
| 12 | CuSO₄ | 3 parts by mass | S, Mn, Cu | 0.54 | 31 | 15 | Example |
| 13 | CuSO₄ | 10 parts by mass | S, Mn, Cu | 1.42 | 62 | 25 | Example |
| 14 | K₂SeO₄ | 3 parts by mass | Se, Mn | 0.25 | 24 | 20 | Example |

According to Table 3, it is understood that a grain-oriented electrical steel sheet with excellent film adhesion can be obtained under conditions within the scope of the present disclosure.

## Claims

1. A grain-oriented electrical steel sheet comprising a base film, wherein
the base film comprises ceramic particles, and either or both of S and Se are present at 0.02 at% to 2.00 at% at grain boundaries of the ceramic particles.

2. The grain-oriented electrical steel sheet according to claim 1, wherein the S and Se elements are sulfides or selenides of at least one selected from the group consisting of Mn, Ca, Sr, Cu and Mg.

3. The grain-oriented electrical steel sheet according to claim 1 or 2, wherein a thickness of a layer between grain boundaries of the ceramic particles where the S and Se elements are present is 50 nm or less.

4. The grain-oriented electrical steel sheet according to any one of claims 1 to 3, wherein the ceramic particles comprise forsterite.
